# FASCICULE DE BREVET EUROPEEN

(11) **EP 1 041 278 B1**
(45) Date de publication et mention de la délivrance du brevet: **17.03.2004**
(21) Numéro de dépôt: 00400742.3
(22) Date de dépôt: 17.03.2000
(51) Int. Cl.: F02N 11/08, H02P 1/04

(54) **Dispositif de commande de démarreur de véhicule automobile produisant une usure faible du démarreur**
Anlasser-Regelvorrichtung für Kraftfahrzeuge zur Erzeugung eines geringen Starterverschleisses
Vehicle starter control device to produce less starter wear

(30) Priorité: 31.03.1999 FR 9904054
(43) Date de publication de la demande: 04.10.2000
(73) Titulaire: VALEO EQUIPEMENTS ELECTRIQUES MOTEUR, 94017 Creteil (FR)
(72) Inventeur: Vilou, Gérard, 69160 Tassin La Demi Lune (FR)
(74) Mandataire: Gamonal, Didier

(56) Documents cités:
- EP-A- 0 782 265
- DE-A- 19 632 235
- FR-A- 2 749 451

## Description

La présente invention est relative aux dispositifs de commande de démarreur de véhicule automobile.

Tel qu'illustré sur la figure 1, un démarreur de l'état de la technique, représenté par exemple dans la figure 1 du document FR-A-2 749 451 auquel on pourra se reporter pour plus de précisions, comporte un moteur électrique M placé en série avec un relais électromagnétique 1 entre la borne positive d'une batterie et la masse.

Le relais 1 est actionné par une bobine 2 montée en série avec un transistor 4 entre la borne positive de la batterie et la masse, le transistor 4 étant commandé par un organe de commande 5.

La bobine 2 a également pour fonction d'entraîner le pignon d'engrènement porté par l'arbre de sortie du moteur M, et destiné à coopérer avec l'engrenage de la couronne de démarrage du moteur thermique du véhicule automobile.

Lorsqu'un interrupteur de clé de contact 6 disposé entre la borne positive de la batterie et une entrée e1 de l'organe de commande 5 est actionné par un utilisateur, l'organe 5 rend passant le transistor 4 relié à sa sortie s1, de sorte que la bobine 2 est alimentée, que le contact 1 se ferme, et que le courant commence à passer dans le moteur électrique M, qui est de manière connue un moteur électrique de forte puissance et qui comporte un inducteur 3 et un induit.

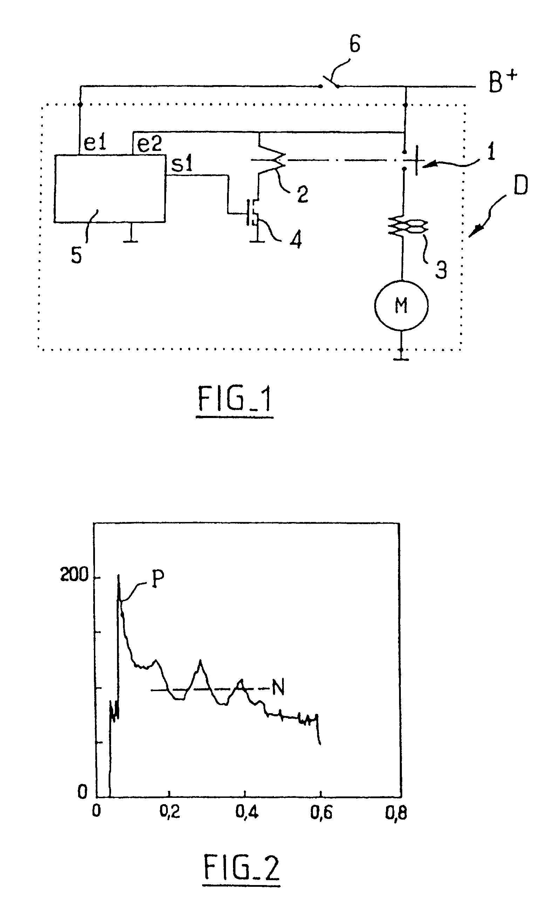

On a représenté sur la figure 2 l'évolution du courant traversant le moteur au démarrage de celui-ci. Au départ, le moteur M ne tourne pas et le courant dans le moteur croît rapidement car il est seulement limité par l'inductance et la résistance du moteur. En fonction de l'inertie du rotor du moteur M et des caractéristiques couple/vitesse du moteur, ce dernier prend progressivement de la vitesse. Une force contre-électromotrice s'oppose alors à la force motrice de la batterie, ce qui réduit le courant absorbé par le moteur M, qui retombe alors à un niveau moyen N qui dépend de la charge mécanique associée au moteur M.

On voit ainsi sur la figure 2 une pointe de courant initiale dans le moteur, suivie d'une phase d'entraînement stabilisé du moteur thermique, pendant laquelle le courant oscille légèrement autour d'une valeur moyenne N. En pratique, il est fréquent d'obtenir une pointe de courant supérieure à deux ou trois fois la valeur moyenne d'entraînement N.

Ces pointes de courant induisent des surtensions et des surintensités qui, par étincelage et arcs électriques, provoquent une usure importante des balais et du collecteur du moteur électrique, qui s'ajoute à l'usure produite lors de l'entraînement effectif du moteur thermique.

On a également proposé dans le document FR 96 06857, publié sous le numéro FR-A-2 749 451, d'injecter dans la bobine 2 un signal carré du type à modulation de largeur d'impulsion (Pulse Width Modulation en anglais) de manière à piloter le relais selon une séquence choisie d'ouvertures/fermetures.

Avec un tel dispositif, les temps de conduction et de blocage ne peuvent être choisis que supérieurs au temps de réponse mécanique du contacteur, c'est à dire selon des fréquences inférieures à 100 Hz dépendant des caractéristiques de masse, d'inductance, de résistance et des forces d'attraction du contacteur.

La période de la tension hachée appliquée dans la bobine de contacteur est donc relativement large, de sorte qu'à chaque créneau de tension dans la bobine, c'est à dire à chaque séquence fermeture /ouverture du contacteur, le courant dans le moteur a le temps de décrire un pic d'intensité et de revenir à zéro.

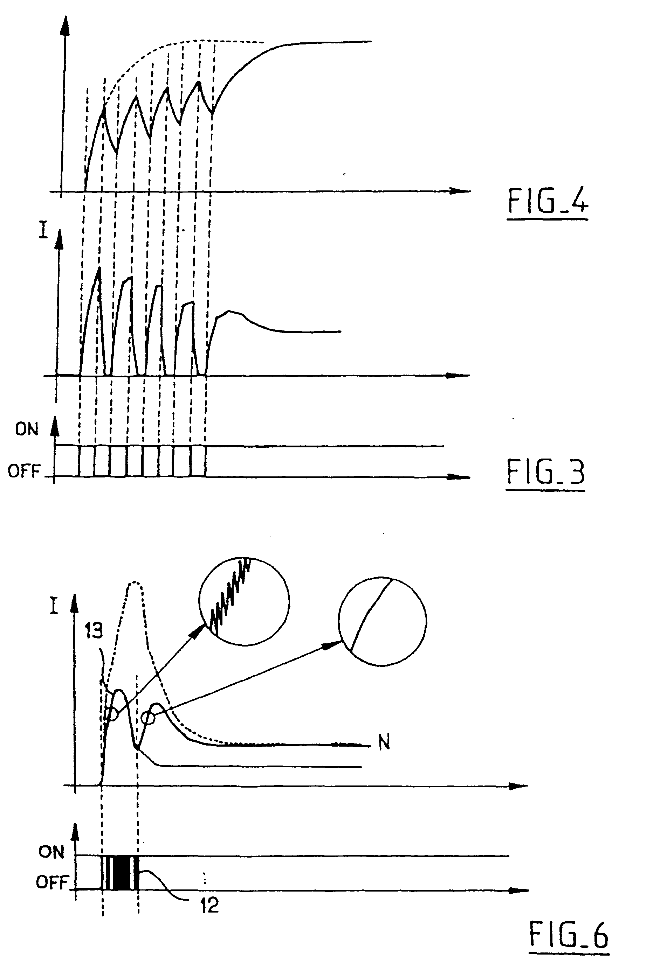

On a représenté sur les figures 3 et 4 respectivement l'évolution par impulsions de l'intensité à travers lui et l'évolution saccadée de la vitesse de rotation du moteur.

Ces grandes variations d'intensité génèrent un étincelage intense dans le moteur et sollicitent particulièrement les balais et le collecteur de celui-ci.

Ainsi, si on alimente le moteur selon une tension moyenne réduite au démarrage, les fortes variations d'intensité dans ce dernier n'en sont pas moins réduites.

L'invention vise proposer un démarreur qui permette de mettre le moteur en rotation sans générer de pointe de courant importante dans celui-ci.

Ce but est atteint selon l'invention grâce à un dispositif pour la commande de l'alimentation du moteur électrique d'un démarreur de véhicule notamment automobile, comportant un commutateur de puissance monté en série avec ledit moteur électrique pour commander l'alimentation de celui-ci et des moyens pour réduire la tension d'alimentation dudit moteur électrique en début de démarrage, caractérisé en ce que le commutateur est constitué par un composant électronique de puissance commandable.

Grâce à l'invention la bobine ne commande plus un relais, on réduit les usures des balais tout en ménageant le collecteur du moteur électrique, qui a ainsi une plus grande dure de vie et ce de manière simple et économique.

D'autres caractéristiques et avantages de l'invention ressortiront encore de la description qui suit. Cette description est purement illustrative, et non limitative. Elle doit être lue en regard des dessins annexés sur lesquels :
- la figure 1, déjà analysée, est un schéma fonctionnel d'un démarreur de véhicule automobile de l'art antérieur ;
- la figure 2, déjà analysée, est un tracé représentant l'évolution du courant dans le moteur électrique de ce même démarreur au démarrage de celui-ci ;
- la figure 3, déjà analysée, est un tracé représentatif de l'évolution du courant dans un moteur électrique d'un démarreur conforme à l'état de la technique dans lequel la bobine de contacteur est alimentée par une tension en créneau ;
- la figure 4, déjà analysée, est un tracé représentatif de l'évolution de la vitesse du moteur électrique de ce même démarreur ;
- la figure 5 est un schéma fonctionnel représentatif d'un démarreur selon l'invention ;
- la figure 6 est un tracé représentatif de l'évolution de l'intensité dans le moteur électrique de ce même démarreur, au démarrage de celui-ci ;
- la figure 7 est un schéma fonctionnel représentant un démarreur selon une seconde variante de l'invention ;
- la figure 8 est un organigramme qui illustre différentes étapes mises en oeuvre par un organe de commande du dispositif de la figure 5 ;

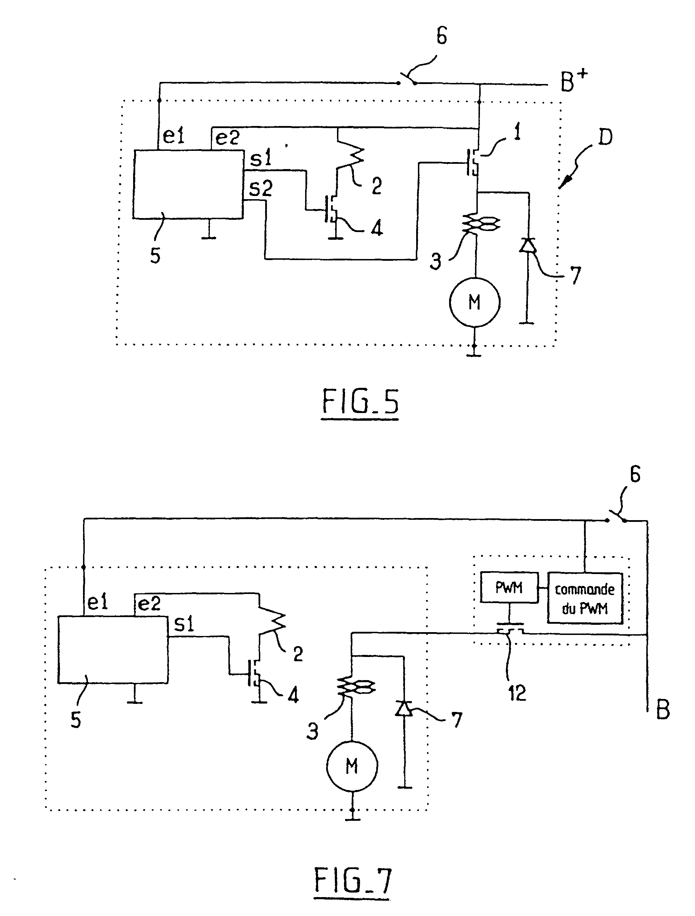

Tel qu'il est représenté à la figure 5, le démarreur de l'invention diffère du démarreur analysé en rapport à la figure 1, par le fait que le contacteur électromagnétique 1 est remplacé par un composant électronique de puissance, qui est ici un transistor 1, par exemple du type MOSFET, comportant une grille, une source et un drain.

Ce transistor est commandé par un organe de commande 5, qui est ici un microprocesseur, à une sortie s2 duquel il est relié par sa grille de commande.

La bobine 2, commandée par les mêmes moyens que ceux de la figure 1, et reliée par une de ses bornes à une entrée e2 de l'unité de commande 5, est ici réduite à sa fonction d'entraînement du pignon d'engrènement relié au moteur électrique M.

Ce montage comporte également une diode 7 montée entre la masse et un point situé entre le transistor 1 et un inducteur 3 placé directement en amont du moteur M, passante de la masse vers ce point.

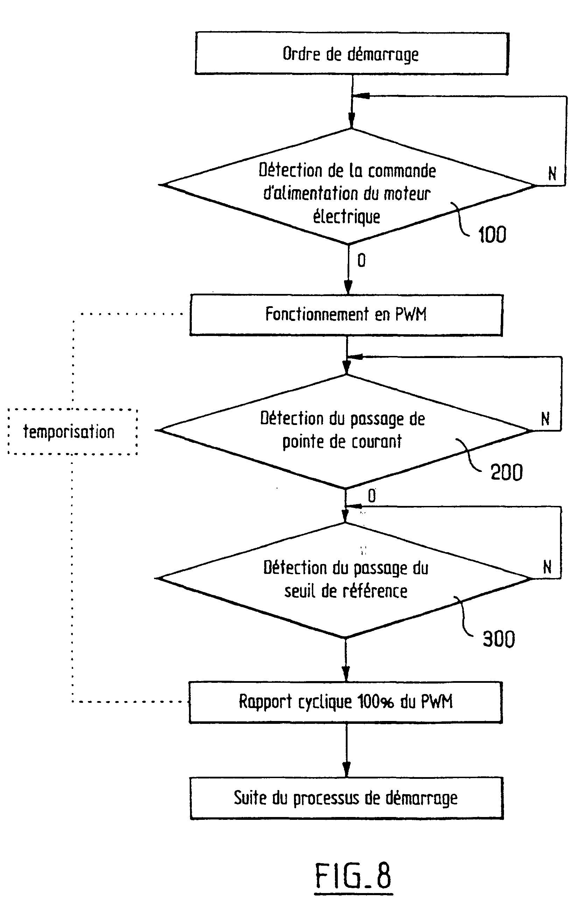

On va maintenant décrire le fonctionnement de ce circuit, en référence aux figures 6 et 8.

Lorsque l'interrupteur de clé de contact 6 est actionné par l'utilisateur, la tension de la sortie s1 qui commande le transistor 4 passe à son niveau haut de sorte que le pignon d'engrènement lié en rotation avec le moteur électrique M de forte puissance, tout en pouvant se déplacer axialement par rapport à celui-ci, s'engage dans la couronne d'entraînement du moteur thermique.

L'unité 5 ne transmet une tension de commande sur la grille du transistor 1 qu'à l'issu d'un intervalle de temporisation suivant le passage à l'état passant du transistor 4, qui est par exemple de quelques dixièmes de seconde, et pendant lequel le transistor 1 est bloqué et aucun courant ne passe dans le moteur M.

L'unité 5 soumet alors la grille du transistor 1 à une tension hachée, de rapport cyclique choisi, telle que représentée sur le tracé 12 de la figure 6. L'inducteur 3 et le moteur M présentant à eux deux une résistance et une inductance non négligeable, et la période du hachage étant choisie suffisamment élevée par rapport aux valeurs de ces inductances, on observe, comme représenté sur la figure 6, une évolution de l'intensité dans le moteur M selon des oscillations de faible amplitude autour d'une courbe moyenne 13.

La diode 7 assure la fonction roue libre pour éviter des surtensions quand le transistor 1 passe à l'état bloqué, c'est à dire à chaque pulsation de tension transmise sur sa grille.

La période de hachage est choisie de façon à ce que l'intensité dans moteur n'ait pas le temps de retomber à zéro pendant un intervalle de blocage du transistor 1.

Dans le cas présent, les oscillations d'intensité dans le moteur sont suffisamment rapides pour que leur amplitude soit très faible par rapport à l'amplitude générale de la courbe moyenne d'intensité 13, en pratique ici selon une amplitude d'oscillation de l'ordre du dixième de l'amplitude de la courbe moyenne 13.

De cette façon, le moteur se comporte en rotation comme s'il était alimenté avec une intensité continue de même évolution que la courbe moyenne 13.

Les oscillations de l'intensité autour de la courbe moyenne 13 sont donc sans effet sur la cinétique du moteur .

Le rapport cyclique de la tension hachée appliquée à la grille du transistor 1 étant choisi égal à un valeur x comprise entre 0,5 et 0,8, le taux de fermeture du transistor est égal à cette valeur x et la tension effective appliquée au couple inducteur 3 / moteur M est égale à x.U, où U est la tension de batterie.

Sous l'effet de cette tension, le moteur est traversé par un courant qui décrit au démarrage un pic d'intensité dont l'amplitude est nettement plus faible que celle du pic atteint lors d'un démarrage sous pleine tension de batterie.

Pour comparaison, on a représenté en trait pointillé sur la figure 6 un tel pic d'intensité dans un dispositif selon l'art antérieur.

Après le passage de ce léger pic d'intensité, l'unité de commande 5 applique au transistor une tension de commande continue qui le maintient à l'état passant. Le moteur M se trouve alors alimenté par la pleine tension de la batterie.

Le moteur M ayant après le passage du pic initial une vitesse de rotation non nulle, et une force contre-électromotrice étant donc présente dans celui-ci, l'application de la pleine tension de batterie ne provoque pas l'apparition d'un pic d'intensité élevé mais d'un deuxième pic d'intensité d'amplitude faible.

L'intensité du moteur se stabilise ensuite autour d'une valeur moyenne N autour de laquelle elle oscille légèrement pendant la phase d'entraînement installé du moteur thermique.

On utilise donc une tension de commande du transistor 1 hachée selon une fréquence suffisamment élevée pour que l'inductance propre du moteur M et celle de l'inducteur 3 réalisent un filtrage de la tension hachée qui leur est appliquée, de sorte que l'intensité dans le moteur M se trouve lissée et ne produise pas d'étincelage destructeur des balais sur le collecteur du moteur. Une telle fréquence se situe, avec les valeurs d'inductance des moteurs et inducteurs habituels, entre environ 100 Hz et 2 kHz.

Tel qu'illustré sur l'organigramme de la figure 8, le fonctionnement de l'organe de commande 5 est le suivant.

Un utilisateur donne au dispositif un ordre de démarrage en fermant l'interrupteur de clé de contact 6. Des moyens de surveillance 100 de la tension sur le câble reliant la clé de contact au démarreur relèvent l'apparition de cet ordre.

Selon une variante, de tels moyens de surveillance 100 peuvent être formés par un organe de surveillance de la tension ou du courant aux bornes du bobinage 2 de commande du pignon ou encore par un organe de surveillance de la tension ou du courant en un point de la branche portant le moteur.

Une fois cette détection réalisée, ces moyens de surveillance 100 transmettent un signal de détection de l'ordre de démarrage à un moyen de commande du transistor 1, qui appliquent alors sur la grille du transistor 1 une tension à modulation de largeur d'impulsion (PWM, Pulse Width Modulation en anglais), et active des moyens 200 de détection du passage de la pointe de courant initiale dans le moteur M.

Ainsi la grille du transistor 1 est d'abord alimentée par une tension hachée de façon à alimenter temporairement le moteur électrique M du démarreur sous une tension efficace réduite sans avoir une pointe de courant néfaste à la durée de vie du démarreur.

Les moyens 200 de détection de passage de la pointe de courant peuvent consister en un moyen apte à comparer l'intensité ou la tension prélevée aux bornes du moteur M à un niveau de tension ou d'intensité choisi à détecter un franchissement à la baisse de ce niveau choisi et à interpréter ce franchissement comme la fin de la pointe de courant.

Dans le cas présent, ce détecteur 200 du passage de la pointe de courant est un moyen de mesure et de comparaison d'intensité dans la branche portant le moteur M.

Une fois ce passage du seuil de courant détecté par ce moyen 200, l'organe 5 déclenche l'activation d'un deuxième détecteur de passage d'un seuil de référence de tension 300.

Si le second seuil de tension est considéré par ce second détecteur comme passé, l'organe 5 applique au transistor 1 une tension de commande continue de mise à l'état passant.

Selon une variante, l'unité 5 est prévue pour déclencher le passage du pic d'intensité un accroissement net du rapport cyclique de fermeture de ce transistor correspondant à un accroissement net de la tension effective appliquée au moteur.

L'organe de commande 5 peut également être prévu pour faire évoluer le taux d'ouverture de manière progressive vers une ouverture à 100%.

Plus généralement, la tension de grille hachée est avantageusement produite par un circuit PWM qui produit un pilotage de celle-ci en rapport cyclique suivant une loi prédéterminée avec éventuellement des paramètres correctifs choisis en fonction de la température ambiante, de la tension batterie ou de l'intensité démarreur.

Le courant I est donné par l'expression :
I = (Uₘ- E(t)).(1- Exp(k.t/R)) où E est la force contre-électromotrice du moteur fonction croissante de la vitesse ; k est fonction de la résistance et de l'inductance du moteur; R est la résistance totale du circuit de puissance. Le rapport cyclique du PWM permet donc de régler la tension Uₘ entre 0,5 et 0,8.U, où U est la tension de la batterie.

Dans une autre variante de l'invention, l'organe de commande 5 peut être prévu pour appliquer au transistor 1 un tension effective réduite pendant une durée prédéterminée. Ce mode de fonctionnement fait appel à une temporisation et est illustré par la branche en pointillé sur la figure 8.

Dans ce cas, il est avantageux d'indexer la durée de temporisation à un niveau d'intensité ou de tension mesuré aux bornes de la batterie, ou par rapport à la température ambiante, de façon à compenser les effets de ces paramètres sur la durée de démarrage du moteur M et notamment afin de s'assurer que la pointe de courant est largement retombée avant de déclencher le mode 100% d'alimentation du moteur.

Selon une variante représentée sur la figure 7, le transistor 1 et ses moyens de commande peuvent former un module séparé placé à l'extérieur du démarreur.

La présente invention permet d'utiliser des batteries de très forte puissance sans endommager le démarreur. Elle permet également de réduire les contraintes mécaniques des différents sous-ensembles compris entre le moteur électrique M et le pignon d'engrènement.

Ce dispositif selon l'invention est particulièrement utile dans le cas d'une utilisation du démarreur en «stop and go» pour économiser du carburant, c'est à dire dans le cas d'un véhicule comportant des moyens d'arrêt automatique de son moteur thermique à l'immobilisation du véhicule et comportant des moyens de détection et de redémarrage répondant à une manifestation du conducteur d'un souhait de rouler à nouveau.

Ainsi qu'on l'aura compris on alimente temporairement le démarreur sous tension réduite et la bobine 2, lorsque le transistor T1 est à l'état passant, permet l'avancement du lanceur associé au pignon d'engrènement ; la bobine 2 pilotant un noyau plongeur agissant sur le lanceur via par exemple une fourchette.

C'est par l'intermédiaire de ce lanceur, doté intérieurement de rainures hélicoïdales en prise avec des rainures hélicoïdales de l'arbre de sortie du moteur M, que le pignon peut se déplacer axialement par rapport à l'arbre.

Grâce à l'invention le temps de commutation du lanceur est réduit.

## Revendications

1. Dispositif pour la commande de l'alimentation du moteur électrique (M) d'un démarreur de véhicule notamment automobile, comportant un commutateur de puissance (1) monté en série avec ledit moteur électrique (M) pour commander l'alimentation de celui-ci et des moyens pour réduire la tension d'alimentation dudit moteur électrique (M) en début de démarrage, **caractérisé en ce que** le commutateur (1) est constitué par un composant électronique de puissance commandable.

2. Dispositif selon la revendication 1, **caractérisé en ce que** les moyens pour réduire la tension d'alimentation comportent des moyens de commande (5) du commutateur (1) adaptés à fournir une tension d'alimentation hachée du moteur électrique (M).

3. Dispositif selon la revendication 2, **caractérisé en ce que** les moyens de commande (5) du commutateur (1) sont aptes à produire une tension d'alimentation hachée du moteur électrique (M) ayant une fréquence suffisamment élevée pour ne pas permettre à l'intensité traversant le moteur (M) de revenir à zéro entre deux oscillations de cette tension.

4. Dispositif selon la revendication 3, **caractérisé en ce que** la fréquence de hachage est choisie suffisamment élevée par rapport à la valeur de l'inductance du moteur (M) pour que le courant dans le moteur (M) oscille autour d'une courbe moyenne avec une amplitude d'oscillation inférieure au dixième de l'amplitude de cette courbe moyenne.

5. Dispositif selon l'une des revendications précédentes, **caractérisé en ce que** la fréquence de hachage est comprise entre 100 Hz et 2 kHZ.

6. Dispositif selon l'une des revendications précédentes, **caractérisé en ce que** les moyens de commande (5) dudit composant (1) comprennent des moyens pour détecter la fin d'un pic d'intensité de démarrage du moteur électrique (M).

7. Dispositif selon la revendication 6, **caractérisé en ce que** les moyens de commande (5) sont aptes à commander après la fin du pic une augmentation du taux cyclique d'état passant du composant (1).

8. Dispositif selon la revendication 6, **caractérisé en ce que** les moyens de commande (5) sont aptes à commander après la fin du pic un passage dans un état continu passant du composant (1).

9. Dispositif selon l'une des revendications précédentes, **caractérisé en ce qu'**il comprend une diode montée entre la masse et un point situé entre le commutateur (1) et le moteur (M) dans le sens passant de la masse vers ce point.

10. Dispositif selon l'une des revendications précédentes, **caractérisé en ce qu'**il comprend des moyens pour commander automatiquement un arrêt du moteur thermique du véhicule lors d'une immobilisation du véhicule et des moyens de détection d'une volonté de rouler à nouveau du conducteur.

## Patentansprüche

1. Vorrichtung zur Steuerung der Speisung des Elektromotors (M) eines Anlassers, insbesondere eines Kraftfahrzeuganlassers, die einen Leistungsschalter (1 ), der mit dem besagten Elektromotor (M) in Reihe geschaltet ist, um dessen Speisung zu steuern, und Mittel zur Reduzierung der Speisespannung des besagten Elektromotors (M) zu Beginn des Anlaßvorgangs umfaßt, **dadurch gekennzeichnet, daß** der Schalter (1) aus einem ansteuerbaren elektronischen Leistungsbauteil besteht.

2. Vorrichtung nach Anspruch 1, **dadurch gekennzeichnet, daß** die Mittel zur Reduzierung der Speisespannung Steuermittel (5) zur Steuerung des Schalters (1) umfassen, die in der Lage sind, eine zerhackte Speisespannung des Elektromotors (M) zu liefern.

3. Vorrichtung nach Anspruch 2, **dadurch gekennzeichnet, daß** die Steuermittel (5) zur Steuerung des Schalters (1) in der Lage sind, eine zerhackte Speisespannung des Elektromotors (M) zu erzeugen, die eine ausreichend hohe Frequenz aufweist, um zu verhindern, daß die durch den Elektromotor (M) fließende Stromstärke zwischen zwei Schwingungen dieser Spannung auf null zurückgeht.

4. Vorrichtung nach Anspruch 3, **dadurch gekennzeichnet, daß** die Zerhackungsfrequenz ausreichend hoch bezogen auf den Wert der Induktivität des Elektromotors (M) gewählt wird, damit der Strom im Elektromotor (M) um eine mittlere Kurve mit einer Schwingamplitude schwingt, die kleiner als ein Zehntel der Amplitude dieser mittleren Kurve ist.

5. Vorrichtung nach einem der vorangehenden Ansprüche, **dadurch gekennzeichnet, daß** die Zerhackungsfrequenz zwischen 100 Hz und 2 kHz liegt.

6. Vorrichtung nach einem der vorangehenden Ansprüche, **dadurch gekennzeichnet, daß** die Steuermittel (5) des besagten Bauteils (1) Mittel umfassen, um das Ende eines Stromstärkepeaks beim Anlaufen des Elektromotors (M) zu erfassen.

7. Vorrichtung nach Anspruch 6, **dadurch gekennzeichnet, daß** die Steuermittel (5) in der Lage sind, nach dem Ende des Peaks eine Erhöhung des Taktverhältnisses für den durchgeschalteten Zustand des Bauteils (1) zu steuern.

8. Vorrichtung nach Anspruch 6, **dadurch gekennzeichnet, daß** die Steuermittel (5) in der Lage sind, nach dem Ende des Peaks einen Übergang in einen kontinuierlichen durchgeschalteten Zustand des Bauteils (1) zu steuern.

9. Vorrichtung nach einem der vorangehenden Ansprüche, **dadurch gekennzeichnet, daß** sie eine Diode umfaßt, die zwischen der Masse und einem Punkt geschaltet ist, der sich zwischen dem Schalter (1) und dem Elektromotor (M) in der Durchlaßrichtung von der Masse zu diesem Punkt befindet.

10. Vorrichtung nach einem der vorangehenden Ansprüche, **dadurch gekennzeichnet, daß** sie Mittel, um automatisch eine Abschaltung des Verbrennungsmotors des Fahrzeugs bei einem Anhalten des Fahrzeugs zu veranlassen, und Mittel zur Erfassung einer seitens des Fahrers bestehenden Absicht weiterzufahren umfaßt.

## Claims

1. Device for controlling the power supply to the electric motor (M) of a vehicle starter, in particular for a car, comprising a power switch (1) connected in series with the said electric motor (M) for controlling the power supply thereof and means for reducing the supply voltage of the said electric motor (M) at the beginning of starting, **characterised in that** the switch (1) consists of a controllable electronic power component.

2. Device according to Claim 1, **characterised in that** the means for reducing the supply voltage comprise means (5) of controlling the switch (1) adapted to supply a chopped supply voltage for the electric motor (M).

3. Device according to Claim 2, **characterised in that** the means (5) of controlling the switch (1) are able to produce a chopped supply voltage for the electric motor (M) having a sufficiently high frequency not to allow the current passing through the motor (M) to return to zero between two oscillations of this voltage.

4. Device according to Claim 3, **characterised in that** the chopping frequency is chosen sufficiently high with respect to the value of the inductance of the motor (M) for the current in the motor (M) to oscillate about a mean curve with an oscillation amplitude less than one tenth of the amplitude of this mean curve.

5. Device according to one of the preceding claims, **characterised in that** the chopping frequency is between 100 Hz and 2 kHz.

6. Device according to one of the preceding claims, **characterised in that** the means (5) of controlling the said component (1) comprise means for detecting the end of a starting current peak of the electric motor (M).

7. Device according to Claim 6, **characterised in that** the control means (5) are able to control, after the end of the peak, an increase in the conducting state duty cycle of the component (1).

8. Device according to Claim 6, **characterised in that** the control means (5) are able to control, after the end of the peak, a change to a continuous conducting state of the component (1).

9. Device according to one of the preceding claims, **characterised in that** it comprises a diode connected between earth and a point situated between the switch (1) and the motor (M) in the conducting direction from earth to this point.

10. Device according to one of the preceding claims, **characterised in that** it comprises means for automatically controlling a stoppage of the thermal engine of the vehicle when the vehicle is stopped and means of detecting an intention of the driver to drive once again.
